# FASCICULE DE BREVET EUROPEEN

(11) **EP 0 851 359 B1**
(45) Date de publication et mention de la délivrance du brevet: **09.06.1999**
(21) Numéro de dépôt: 97402869.8
(22) Date de dépôt: 28.11.1997
(51) Int. Cl.: G06F 12/14

(54) **Procédé et dispositif de lecture de mémoire ayant des zones protégées en lecture**
Leseverfahren und Lesevorrichtung eines Speichers mit lesegeschützten Zonen
Method and apparatus for reading a memory having read-protected zones

(30) Priorité: 24.12.1996 FR 9615931
(43) Date de publication de la demande: 01.07.1998
(73) Titulaire: STMicroelectronics S.A., 94250 Gentilly (FR)
(72) Inventeur: Gaultier, Jean-Marie, 75116 Paris (FR)
(74) Mandataire: Ballot, Paul Denis Jacques

(56) Documents cités:
- EP-A- 0 326 053
- EP-A- 0 540 095
- EP-A- 0 651 394
- FR-A- 2 667 714
- US-A- 4 683 553

## Description

L'invention concerne les mémoires associées aux unités centrales de traitement de micro-ordinateurs et, plus particulièrement, dans de telles mémoires une architecture et un dispositif qui permettent de protéger certaines zones de la mémoire contre des lectures non autorisées.

Les micro-ordinateurs sont utilisés dans de nombreuses applications telles que les cartes bancaires avec "puce" et les combinés de téléphones mobiles. Les possibilités offertes aux utilisateurs sont variables d'un utilisateur à l'autre selon les caractéristiques de l'abonnement souscrit et le prix d'un abonnement dépend des possibilités auxquelles il donne accès.

Pour des raisons de prix de revient, les micro-ordinateurs, appelés aussi micro-contrôleurs, qui sont mis en oeuvre dans de telles applications sont prévus pour réaliser toutes les possibilités ou fonctions offertes mais l'accès à ces fonctions est limité selon le type d'abonnement souscrit, la limitation intervenant à la fin du processus de fabrication en interdisant l'accès à certaines zones de la mémoire qui correspondent à des fonctions non souscrites dans l'abonnement.

Les zones de la mémoire qui correspondent à des fonctions de l'abonnement souscrit peuvent être identifiées par des codes C1, C2, C3 ......CN de sorte que, schématiquement, un code C1 corresponde à bénéficier des fonctions de base tandis qu'un code CN corresponde à bénéficier de toutes les fonctions disponibles.

Il est donc important que ces codes C1 à CN ne puissent pas être identifiés par un fraudeur, ce qui lui permettrait d'avoir accès, en connaissant CN, à toutes les fonctions disponibles en ne payant que l'abonnement souscrit pour les fonctions de base.

Un but de la présente invention est donc de réaliser une mémoire associée à une unité centrale de traitement de micro-ordinateur ou micro-contrôleur dans laquelle toutes ou seulement certaines zones de la mémoire sont protégées contre des lectures non autorisées.

Le brevet EP-A-0 540 095 décrit un procédé et un dispositif selon le préambule des présentes revendications indépendantes.

L'invention concerne donc un procédé de lecture d'une mémoire d'une unité centrale de traitement d'un micro-ordinateur à laquelle sont associés des circuits d'adressage des cellules de ladite mémoire et des circuits de lecture des signaux lus dans les cellules de ladite mémoire sélectionnées par lesdits circuits d'adressage comprenant les étapes suivantes :
(a) Organisation de la mémoire en zones, chaque zone correspondant aux cellules auxquelles l'unité centrale de traitement doit avoir accès pour réaliser tout ou partie d'une fonction déterminée;
(b) Affectation à chaque zone définie par l'étape (a) d'un code différent d'une zone à la suivante; et
caractérisé en ce qu'il comprend les étapes suivantes :
(c) Enregistrement de tout ou partie des codes de zones définis par l'étape (b) dans une première mémoire;
(d) Enregistrement de tout ou partie des codes définis par l'étape (b) dans une deuxième mémoire, le nombre de codes enregistrés dans cette deuxième mémoire dépendant des fonctions prévues pour être mises en oeuvre par l'unité centrale de traitement;
(e) Comparaison des codes enregistrés dans la première et la deuxième mémoires;
(f)
   - Si les codes comparés sont identiques : autorisation de l'accès à la mémoire par l'unité centrale de traitement pour les zones correspondant à des codes identiques enregistrés dans la première et la deuxième mémoires;
   - Si les codes comparés ne sont pas identiques : interdiction de l'accès à la mémoire par l'unité centrale de traitement pour les zones correspondant aux codes de la première mémoire qui ne sont pas identiques aux codes de la deuxième mémoire .

L'étape (c) peut consister en l'enregistrement d'une partie des codes des zones définies par l'étape (b) dans la première mémoire, lesdits codes enregistrés correspondant aux zones dont l'accès doit être autorisé les autres codes non enregistrés correspondant aux zones dont l'accès est libre.

L'étape (d) est effectuée par l'unité centrale de traitement à chaque mise en route ou initialisation de l'unité centrale de traitement.

Pour réaliser l'étape (d), l'unité centrale de traitement doit avoir une mémoire pour enregistrer les codes correspondant aux zones protégées auxquelles cette unité doit avoir accès pour réaliser les fonctions prévues.

L'invention concerne également un dispositif de lecture d'une mémoire pour mettre en oeuvre le procédé défini ci-dessus, dispositif comprenant :
- une première mémoire dans laquelle sont enregistrés tous les codes de zones définis par l'étape (b), et
caractérisé en ce qu'il comprend :
- une deuxième mémoire dans laquelle sont enregistrés les codes de zones correspondant aux zones auxquelles l'unité centrale de traitement doit avoir accès pour réaliser les fonctions prévues; et
- un circuit comparateur dont les bornes d'entrée sont connectées aux bornes de sortie des première et deuxième mémoires de manière à comparer les codes contenus dans la première et la deuxième mémoires et à fournir un signal différent selon qu'il y a identité ou non des codes comparés, ledit signal servant à autoriser, via les circuits d'adressage, l'accès ou non à la mémoire à la zone définie par l'un des codes contenus dans la première mémoire.

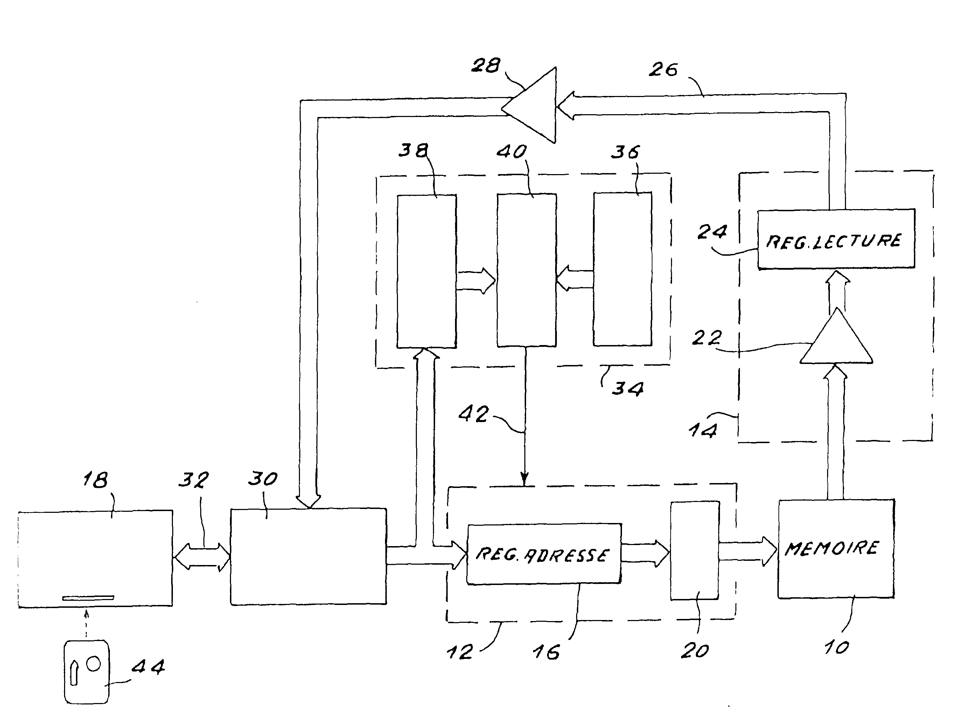

L'invention sera mieux comprise à l'aide de la description suivante d'un exemple particulier de réalisation, ladite description étant faite en relation avec le dessin joint dans lequel la figure unique est un schéma fonctionnel d'une mémoire présentant des caractéristiques de la présente invention.

De manière connue, une mémoire 10 associée à une unité centrale 18 d'un micro-ordinateur (non représenté) comprend des circuits d'adressage 12 des cellules ou cases de la mémoire 10 et des circuits de lecture 14 des signaux provenant des cellules ou cases sélectionnées par les circuits d'adressage 12.

Les circuits d'adressage 12 comprennent essentiellement un registre d'adresse 16 pour recevoir le code d'adressage de la mémoire fourni par l'unité centrale de traitement 18 et des circuits de sélection 20 qui consistent en des circuits de décodage du code d'adressage.

Les circuits de lecture 14 comprennent essentiellement des amplificateurs de lecture 22 qui amplifient les signaux fournis par les cellules ou cases sélectionnées et un registre de lecture 24 qui enregistre sous forme binaire les signaux lus. Le contenu binaire du registre de lecture 24 ou donnée est transmis à l'unité centrale de traitement 18 par l'intermédiaire d'un bus unidirectionnel 26, d'amplificateurs de sortie 28 et d'un circuit d'entrées/sorties 30.

Le circuit d'entrées/sorties 30 est le passage obligé des données contenues dans le registre de lecture 24 comme on vient de le décrire mais aussi des codes d'adressage et, de ce fait, est connecté à l'unité centrale de traitement 18 par un bus bidirectionnel 32. A la mémoire 10 sont également associés des circuits d'enregistrement des cellules ou cases de mémoire qui ne sont pas représentés, ni décrits car ils n'interviennent pas dans la présente invention qui concerne uniquement la lecture de la mémoire 10.

Pour mettre en oeuvre l'invention, les circuits d'adressage 12 doivent être modifiés et complétés par un dispositif 34 qui comprend une première mémoire 36 de codes de zones de la mémoire 10, une deuxième mémoire 38 et un comparateur 40. La première mémoire 36, de type permanent, peut être constituée d'autant de registres que de codes de zone ou de secteur de la mémoire 10. Chaque registre comprend des bornes de sortie qui sont connectées à une première série de bornes d'entrée du comparateur 40. Il comprend également des bornes d'entrée non représentées, qui servent à enregistrer les codes des zones de la mémoire 10 par tous moyens connus.

La deuxième mémoire 38, de type volatil, peut être constituée aussi de registres et a des bornes d'entrée qui sont connectées à l'unité centrale de traitement 18 par l'intermédiaire du circuit d'entrées/sorties 30. La deuxième mémoire 38 comporte également des bornes de sortie qui sont connectées à une deuxième série de bornes d'entrée du comparateur 40. Le comparateur 40 présente une borne de sortie 42 qui est connectée aux circuits d'adressage 12.

Chaque registre de la mémoire 36 contient un code de zone ou de secteur de la mémoire 10, ce code peut correspondre en clair aux chiffres les plus significatifs des codes d'adressage de la mémoire 10 ou correspondre à un cryptage de ces chiffres les plus significatifs de façon à augmenter la sécurité contre les fraudes. Certains de ces codes ou clés correspondent à des zones de la mémoire 10 qui sont affectées à l'exécution de fonctions classiques ou de base tandis que d'autres sont affectées à l'exécution de fonctions particulières.

Dans le cas d'un micro-ordinateur pour un téléphone mobile, ces fonctions particulières peuvent être la numérotation abrégée, la réception et l'enregistrement d'un message, la réception et l'enregistrement d'une télécopie, etc ....

Selon l'invention, ces zones correspondantes à ces fonctions particulières ne seront accessibles par l'unité centrale de traitement 18 que si cette dernière fournit les clés correspondantes. A cet effet, ces clés sont transmises par l'unité centrale de traitement à chaque mise en route du système et sont enregistrées dans la deuxième mémoire 38. Ces clés ainsi transmises sont comparées aux clés contenues dans la mémoire 36 dans le comparateur 40 qui fournit alors sur la borne de sortie 42 autant de signaux qu'il y a de codes identiques, chaque signal ayant pour effet de libérer l'accès à la zone de la mémoire 10 correspondant à cette clé.

Les clés, transmises par l'unité centrale de traitement 18, sont "entrées" dans cette dernière au moment de la personnalisation du système selon les fonctions auxquelles l'utilisateur a droit par suite de l'abonnement souscrit.

Cette entrée des clés dans l'unité centrale de traitement 10 peut être réalisée par l'intermédiaire d'une carte à mémoire 44 ou par tout autre moyen. Ces clés doivent être présentes dans l'unité centrale de traitement 18 lors de chaque mise en route et, de ce fait, doivent y être mémorisées de manière permanente ou y être introduites à chaque mise en route par la carte à mémoire 44.

L'utilisation des clés de la mémoire décrite ci-dessus permet l'accès à la mémoire 10 que si l'unité centrale de traitement 18 transmet, à chaque mise en route ou initialisation du système, les clés des zones qui doivent être utilisées pour un bon fonctionnement du système. En l'absence de reconnaissance de ces clés, le système ne peut pas fonctionner correctement.

Dans la description ci-dessus, on a supposé qu'il y avait autant de clés que de zones de la mémoire, ce qui conduit à des mémoires 36 et 38 qui peuvent être importantes en termes de circuits supplémentaires sur le substrat de la mémoire 10 et donc de prix de revient élevé par voie de conséquence. Aussi, il est prévu que les zones de la mémoire 10 qui correspondent à des fonctions classiques ou de base ne comportent pas de clés, les clés étant réservées aux zones affectées à l'exécution de fonctions particulières. Ainsi, les capacités des mémoires 36 et 38 seront déterminées par le nombre de clés correspondant aux zones réservées.

A défaut de clé pour une zone de mémoire, cette dernière est considérée comme librement accessible.

La description de l'invention qui vient d'être faite en relation avec la figure unique permet de définir les étapes suivantes d'un procédé de lecture de la mémoire 10 :
(a) Organisation de la mémoire 10 en zones, chaque zone correspondant aux cellules auxquelles l'unité centrale de traitement 18 doit avoir accès pour réaliser tout ou partie d'une fonction déterminée;
(b) Affectation à chaque zone définie par l'étape (a) d'un code différent d'une zone à la suivante;
(c) Enregistrement de tout ou partie des codes de zones définis par l'étape (b) dans une première mémoire 36;
(d) Enregistrement de tout ou partie des codes définis par l'étape (b) dans une deuxième mémoire 38, le nombre de codes enregistrés dans cette deuxième mémoire dépendant des fonctions prévues pour être mises en oeuvre par l'unité centrale de traitement 10;
(e) Comparaison des codes enregistrés dans la première mémoire 36 et la deuxième mémoire 38 ;
(f)
   - Si les codes comparés sont identiques : autorisation de l'accès à la mémoire 10 par l'unité centrale de traitement 18 pour les zones correspondant à des codes identiques enregistrés dans la première mémoire 36 et la deuxième mémoire 38 ;
   - Si les codes comparés ne sont pas identiques : interdiction de l'accès à la mémoire 10 par l'unité centrale de traitement 18 pour les zones correspondant aux codes de la première mémoire 36 qui ne sont pas identiques aux codes de la deuxième mémoire 38.

La première mémoire 36 est prévue pour n'enregistrer que les codes qui correspondent à des zones dont l'accès doit être autorisé pour réaliser certaines fonctions, les autres codes de zones qui correspondent à des fonctions de base autorisées ne sont pas enregistrés dans cette mémoire 36.

La protection contre des accès à des fonctions non autorisées est obtenue en prévoyant que l'étape (d) d'enregistrement des codes dans la deuxième mémoire 38 soit effectuée à chaque mise en route de l'unité centrale (18) lors de l'initialisation du système.

A cet effet, l'unité centrale (18) doit mémoriser de manière permanente les codes qu'elle transmet à la deuxième mémoire 38, et cette mémorisation est effectuée lors de la personnalisation de l'unité centrale 18 pour tenir compte des fonctions permises à l'utilisateur. Cette personnalisation peut être obtenue par une carte à mémoire 44 dont le contenu est "chargé" dans l'unité centrale 18 à chaque mise en route .

Les deux mémoires 36 et 38 peuvent être réalisées à l'aide de registres mais ces registres doivent être de type permanent pour la mémoire 36 et de type volatil pour la mémoire 38, le terme volatil signifiant que le contenu des registres disparaît en l'absence d'alimentation électrique .

## Revendications

1. Procédé de lecture d'une mémoire (10) d'une unité centrale de traitement (18) d'un micro-ordinateur à laquelle sont associés des circuits d'adressage (12) des cellules de ladite mémoire (10) et des circuits de lecture (14) des signaux lus dans les cellules de ladite mémoire sélectionnées par lesdits circuits d'adressage (12) comprenant les étapes suivantes :
(a) Organisation de la mémoire (10) en zones, chaque zone correspondant aux cellules auxquelles l'unité centrale de traitement (10) doit avoir accès pour réaliser tout ou partie d'une fonction déterminée;
(b) Affectation à chaque zone définie par l'étape (a) d'un code différent d'une zone à la suivante; et
caractérisé en ce qu'il comprend les étapes suivantes :
(c) Enregistrement de tout ou partie des codes de zones définis par l'étape (b) dans une première mémoire (36);
(d) Enregistrement de tout ou partie des codes définis par l'étape (b) dans une deuxième mémoire (38), le nombre de codes enregistrés dans cette deuxième mémoire dépendant des fonctions prévues pour être mises en oeuvre par l'unité centrale de traitement (10);
(e) Comparaison des codes enregistrés dans la première (36) et la deuxième (38) mémoires;
(f)
- Si les codes comparés sont identiques : autorisation de l'accès à la mémoire (10) par l'unité centrale de traitement (18) pour les zones correspondant à des codes identiques enregistrés dans la première (36) et la deuxième (38) mémoires;
- Si les codes comparés ne sont pas identiques : interdiction de l'accès à la mémoire (10) par l'unité centrale de traitement (18) pour les zones correspondant aux codes de la première mémoire (36) qui ne sont pas identiques aux codes de la deuxième mémoire (38) .

2. Procédé selon la revendication 1, caractérisé en ce que l'étape (c) consiste en l'enregistrement d'une partie des codes des zones définies par l'étape (b) dans la première mémoire (36) , lesdits codes enregistrés correspondant aux zones dont l'accès doit être autorisé et les autres codes non enregistrés correspondant aux zones dont l'accès est libre.

3. Procédé selon la revendication 1 ou 2, caractérisé en ce que l'étape (d) est effectuée par l'unité centrale de traitement (18) à chaque mise en route ou initialisation de l'unité centrale de traitement (18).

4. Procédé selon la revendication 3, caractérisé en ce qu'il comprend une étape supplémentaire consistant en l'enregistrement dans une mémoire de l'unité centrale de traitement (10) des codes correspondant aux zones auxquelles cette dernière doit avoir accès pour réaliser les fonctions prévues.

5. Procédé selon la revendication 4, caractérisé en ce que l'enregistrement dans la mémoire de l'unité centrale de traitement (18) des codes d'accès à la mémoire (10) est réalisé à l'aide d'une carte à mémoire.

6. Dispositif de lecture d'une mémoire (10) pour mettre en oeuvre le procédé selon l'une quelconque des revendications 1 à 5, comprenant :
- une première mémoire (36) comportant des bornes d'entrée et des bornes de sortie dans laquelle sont enregistrés, via les bornes d'entrée, tous les codes de zones définis par l'étape (b), et
caractérisé en ce qu'il comprend :
- une deuxième mémoire (38) comportant des bornes d'entrée et des bornes de sortie dans laquelle sont enregistrés, via les bornes d'entrée, les codes de zones correspondant aux zones auxquelles l'unité centrale de traitement (18) doit avoir accès pour réaliser les fonctions prévues; et
- un circuit comparateur (40) dont les bornes d'entrée sont connectées aux bornes de sortie des première (36) et deuxième (38) mémoires de manière à comparer les codes contenus dans la première et la deuxième mémoires et à fournir sur au moins un conducteur de sortie (42) un signal différent selon qu'il y a identité ou non des codes comparés, ledit signal servant à autoriser, via les circuits d'adressage (12) , l'accès ou non à la mémoire (10) à la zone définie par l'un des codes contenus dans la première mémoire (36).

7. Dispositif selon la revendication 6, caractérisé en ce que la première mémoire (36) comprend autant de registres de type permanent que de codes correspondant à des zones protégées pour lesquelles l'accès doit être autorisé pour réaliser toutes les fonctions prévues.

8. Dispositif selon la revendication 6 ou 7, caractérisé en ce que la deuxième mémoire (38) comprend autant de registres de type volatil que de codes correspondant à des zones protégées par lesquelles l'accès doit être autorisé pour réaliser au moins une partie des fonctions prévues.

## Patentansprüche

1. Verfahren zum Lesen eines Speichers (10) einer zentralen Verarbeitungseinheit (18) eines Mikrocomputers, dem Adreßschaltungen (12) für die Zellen des Speichers (10) und Leseschaltungen (14) für die Signale, die in den Zellen des Speichers gelesen werden, welche durch die Adreßschaltungen (12) ausgewählt sind, welches die folgenden Schritte umfaßt:
(a) Einteilen des Speichers (10) in Zonen, wobei jede Zone den Zellen entspricht, auf welche die zentrale Verarbeitungseinheit (10) Zugriff haben muß, um ganz oder teilweise eine bestimmte Funktion auszuführen,
(b) Zuordnen eines Codes zu jeder durch den Schritt (a) definierten Zone, der von demjenigen einer folgenden Zone verschieden ist,
dadurch gekennzeichnet, daß es die folgenden Schritte umfaßt:
(c) teilweises oder vollständiges Aufzeichnen der in dem Schritt (b) definierten Codes der Zonen in einem ersten Speicher (36),
(d) teilweises oder vollständiges Aufzeichnen der in dem Schritt (b) definierten Codes in einem zweiten Speicher (38), wobei die Anzahl der in diesem zweiten Speicher aufgezeichneten Codes von den Funktionen abhängt, welche von der zentralen Verarbeitungseinheit (10) ausgeführt werden sollen,
(e) Vergleichen der in dem ersten (36) und dem zweiten (38) Speicher aufgezeichneten Codes.
(f) Autorisieren des Zugriffs auf den Speicher (10) durch die zentrale Verarbeitungseinheit (18) für diejenigen Zonen, welche identischen Codes entsprechen, die in dem ersten (36) und zweiten (38) Speicher aufgezeichnet sind, wenn die verglichenen Codes identisch sind, und Versagen des Zugriffs auf den Speicher (10) durch die zentrale Verarbeitungseinheit (18) für die Zonen, welche den Codes des ersten Speichers (36) entsprechen, die nicht mit den Codes des zweiten Speichers (38) identisch sind, wenn die miteinander verglichenen Codes nicht identisch sind.

2. Verfahren nach Anspruch 1, dadurch gekennzeichnet, daß der Schritt (c) in dem Aufzeichnen eines Teils der Codes der Zonen in dem ersten Speicher (36) besteht, welche in dem Schritt (b) definiert wurden, wobei die aufgezeichneten Codes den Zonen entsprechen, für die ein Zugriff gestattet werden muß, und die anderen, nicht aufgezeichneten Codes den Zonen entsprechen, auf die der Zugriff frei ist.

3. Verfahren nach Anspruch 1 oder 2, dadurch gekennzeichnet, daß der Schritt (d) durch die zentrale Verarbeitungseinheit (18) bei jedem Starten oder Initialisieren der zentralen Verarbeitungseinheit (18) ausgeführt wird.

4. Verfahren nach Anspruch 3, dadurch gekennzeichnet, daß es einen zusätzlichen Schritt enthält, der in dem Aufzeichnen von Codes in einem Speicher der zentralen Verarbeitungseinheit (18) besteht, welche den Zonen entsprechen, auf welche diese zum Ausführen der vorgesehenen Funktionen Zugriff haben muß.

5. Verfahren nach Anspruch 4, dadurch gekennzeichnet, daß das Aufzeichnen der Zugriffscodes für den Speicher (10) in dem Speicher der zentralen Verarbeitungseinheit (18) mit Hilfe einer Speicherkarte realisiert wird.

6. Lesevorrichtung für einen Speicher (10) zum Ausführen des Verfahrens nach einem der Ansprüche 1 bis 5, welche umfaßt:
- einen ersten Speicher (36), welcher Eingangs- und Ausgangsanschlüsse aufweist und in dem über die Eingangsanschlüsse alle Codes von Zonen aufgezeichnet werden, die in dem Schritt (b) definiert werden;
dadurch gekennzeichnet, daß sie umfaßt:
- einen zweiten Speicher (38), welcher Eingangs- und Ausgangsanschlüsse aufweist und in dem über die Eingangsanschlüsse die Codes von Zonen aufgezeichnet werden, welche denjenigen Zonen entsprechen, auf welche die zentrale Verarbeitungseinheit (18) Zugriff haben muß, um die vorgesehenen Funktionen auszuführen, und
- eine Vergleichsschaltung (40), deren Eingangsanschlüsse mit den Ausgangsanschlüssen des ersten (36) und zweiten (38) Speichers in einer geeigneten Weise zum Vergleichen der Codes, die in dem ersten und zweiten Speicher enthalten sind, und zum Liefern eines Signals auf zumindest einem Ausgangsleiter (42), das verschieden ist, je nachdem, ob eine Identität der verglichenen Codes vorliegt oder nicht, verbunden sind, wobei dieses Signal zum Autorisieren oder Versagen des Zugriffs auf den Speicher (10) in der Zone, welche durch einen der in dem ersten Speicher (36) enthaltenen Codes definiert ist, über die Adreßschaltungen dient.

7. Vorrichtung nach Anspruch 6, dadurch gekennzeichnet, daß der erste Speicher (36) so viele Permanentregister wie Codes aufweist, die geschützten Zonen entsprechen, für welche der Zugriff autorisiert werden muß, um alle vorgesehenen Funktionen auszuführen.

8. Vorrichtung nach Anspruch 6 oder 7, dadurch gekennzeichnet, daß der zweite Speicher (38) so viele flüchtige Register wie Codes aufweist, welche geschützten Zonen entsprechen und durch welche der Zugriff gestattet werden muß, um zumindest einen Teil der vorgesehenen Funktionen auszuführen.

## Claims

1. A method of reading a memory (10) of a central processing unit (18) of a micro-computer to which circuits are linked for addressing (12) cells of said memory (10) and circuits for reading (14) the signals read in the cells of said memory selected by said addressing circuits (12) consisting of the following steps:
(a) organising the memory (10) into zones, each zone corresponding to the cells to which the central processing unit (10) must have access in order to perform all or part of a given function;
(b) assigning to each zone defined by step (a) a code which differs from one zone to the next;
and characterised in that it includes the following steps:
(c) saving all or part of the zone codes defined by step (b) in a first memory (36);
(d) saving all or part of the codes defined by step (b) in a second memory (38), the number of codes saved in this second memory depending on the functions programmed to be run by the central processing unit (18);
(e) comparing the codes saved in the first (36) and the second (38) memories;
(f)
- if the codes compared are identical : authorising access to the memory (10) by the central processing unit (18) for the zones corresponding to identical codes stored in the first (36) and the second (38) memories;
- if the codes compared are not identical : prohibiting access to the memory (10) by the central processing unit (18) for the zones corresponding to the codes of the first memory (36) which are not identical to the codes of the second memory (38).

2. A method as claimed in claim 1, characterised in that step (c) consists in saving some of the zone codes defined by step (b) in the first memory (36), said saved codes corresponding to the zones to which access must be authorised and the other unsaved codes corresponding to the zones to which access is free.

3. A method as claimed in claim 1 or 2, characterised in that step (d) is performed by the central processing unit (18) every time the central processing unit (18) is booted or initialised.

4. A method as claimed in claim 3, characterised in that it includes an additional step consisting in saving in a memory (10) of the central processing unit codes corresponding to the zones to which this latter must have access in order to perform the programmed functions.

5. A method as claimed in claim 4, characterised in that access codes are saved in the memory (10) of the central processing unit (18) with the aid of a memory card.

6. A device for reading a memory (10) in order to run the method as claimed in any one of claims 1 to 5, having :
- a first memory (36) having input terminals and output terminals in which all the codes defined by step (b) are stored via the input terminals
and characterised in that it has :
- a second memory (38) having input terminals and output terminals in which the codes of zones corresponding to the zones to which the central processing unit (18) must have access to perform the programmed functions are saved via the input terminals; and
- a comparator circuit (40), the input terminals of which are connected to the output terminals of the first (36) and second (38) memories in order to compare the codes contained in the first and second memories and to supply across at least one output conductor (42) a signal which differs depending on whether or not the codes compared are identical, said signal being used, via the addressing circuits (12), to authorise or not access to the memory (10) at the zone defined by one of the codes contained in the first memory (36).

7. A device as claimed in claim 6, characterised in that the first memory (36) has as many permanent type registers as there are codes corresponding to protected zones for which access must be authorised in order to perform all the programmed functions.

8. A device as claimed in claim 6 or 7, characterised in that the second memory (38) has as many volatile type registers as there are codes corresponding to protected zones by means of which access must be authorised in order to perform at least some of the programmed functions.
